# EUROPEAN PATENT APPLICATION

(11) **EP 4 611 163 A1**
(43) Date of publication of application: **03.09.2025**
(21) Application number: 23898310.0
(22) Date of filing: 29.11.2023
(51) Int. Cl.: H01M 50/533, H01M 50/516, H01M 50/204

(54) **BATTERY PACK AND METHOD FOR MANUFACTURING SAME**

(30) Priority: 02.12.2022 KR 20220167135; 23.03.2023 KR 20230038211
(71) Applicant: LG Energy Solution, Ltd., Seoul 07335 (KR)
(72) Inventor: SHIN, Ju Hwan, Daejeon 34122 (KR); LEE, Hyoung Suk, Daejeon 34122 (KR); JEON, Jong Pil, Daejeon 34122 (KR)
(74) Representative: Plasseraud IP
(86) International application number: PCT/KR2023/019480
(87) International publication number: WO 2024/117786

(57) **Abstract**

A battery pack can include a plurality of battery cells stacked in a first direction, and a pack case configured to accommodate the plurality of battery cells in an inner space therein. In addition, each of at least a pair of adjacent battery cells among the plurality of battery cells can include an electrode assembly, a cover surrounding the electrode assembly, and a cell lead protruding from a side of the cover in a second direction. Further, the cell lead can include a first part disposed closer to the cover than a second part. Additionally, a maximum dimension of the second part can be greater than a maximum dimension of the first part in the first direction. Furthermore, the second part can include a plane perpendicular to a third direction, and the first direction, the second direction, and the third direction that can be perpendicular to one another.

## Description

### [Technical Field]

The present invention relates to a battery pack and a manufacturing method thereof, and more particularly, to a battery pack that can be manufactured at low costs due to a small number of components thereof, is highly productive, and is less likely to malfunction, and a manufacturing method thereof.

This application claims the benefit of priority based on Korean Patent Application No. 10-2022-0167135, filed on December 2, 2022 and Korean Patent Application No. 10-2023-0038211, filed on March 23, 2023, and the entire contents of the Korean patent applications are incorporated herein by reference.

### [Background Art]

With the advancement of technology for various types of mobile devices, electric vehicles, energy storage systems (ESSs), etc. and an increasing demand therefor, interest and demand for secondary batteries as energy sources are increasing sharply. In the past, nickel cadmium batteries or nickel hydrogen batteries were frequently used as secondary batteries. However, recently, lithium secondary batteries have been frequently used, because they hardly undergo the memory effect compared to nickel-based secondary batteries and thus are freely charged and discharged and have very low self-discharge rates and high energy density.

Generally, in such a lithium secondary battery, a lithium-based oxide and a carbon material are used as a positive electrode active material and a negative electrode active material, respectively. The lithium secondary battery includes: an electrode assembly in which a positive electrode plate coated with the positive electrode active material and a negative electrode plate coated with the negative electrode active material are disposed while a separator is interposed therebetween; and a battery case for sealing and accommodating the electrode assembly together with an electrolyte.

Recently, battery packs have been widely used to drive medium and large-sized devices, such as electric vehicles and energy storage systems, or store energy therefor. In a battery pack of the related art, one or more battery modules and a control unit, e.g., a battery management system (BMS), for controlling charging and discharging of the battery pack are included in a pack case. Here, the one or more battery modules are each configured to include a plurality of battery cells inside a module case. That is, a battery pack of the related art is formed by accommodating a plurality of battery cells (secondary batteries) in a module case to form each battery module and accommodating at least one such battery module in a pack case.

In particular, pouch-type batteries have advantages in various aspects, e.g., they are light in weight and a dead space is small when they are stacked, but are vulnerable to external impact and assemblability thereof is somewhat low. Therefore, generally, a battery pack is manufactured by modularizing multiple cells first and accommodating the multiple cells inside a pack case. As a representative example, a battery pack of the related art is formed by accommodating a plurality of pouch-type battery cells in a module case to form a battery module and accommodating at least one such battery module in a pack case.

However, such a battery pack may of the related art be disadvantageous in terms of energy density. Typically, when a plurality of battery cells are modularized by accommodating them in a module case, the volume of the battery pack may unnecessarily increase or a space to be occupied by the battery cells may decrease due to various components such as a module case or stack frames. Furthermore, a space for accommodation of the battery cells may be reduced to ensure assembly tolerance for such components, as well as a space occupied by components such as the module case or the stack frames. Therefore, in the case of battery packs of the related art, there may be limitations in increasing energy density.

**In** addition, battery packs of the related art may be disadvantageous in terms of assemblability. **In** particular, in order to manufacture a battery pack, a battery module is configured by modularizing a plurality of battery cells and thereafter is accommodated in a pack case, thus complicating a manufacturing process of the battery pack. Moreover, as disclosed in the above-described related art documents, a process of forming a cell stack using stack frames, bolts, plates, etc. and a structure of the cell stack may be very complicated.

### [Disclosure]

### [Technical Problem]

A first technical aspect of the present invention is directed to providing a battery pack that can be manufactured at low costs due to a small number of components thereof, is highly productive, and is less likely to malfunction.

A second technical aspect of the present invention is directed to providing a manufacturing method of a battery pack that can be manufactured at low costs due to a small number of components thereof, is highly productive, and is less likely to malfunction.

A third technical aspect of the present invention is directed to providing a battery cell that can be employed in a battery pack that can be manufactured at low costs due to a small number of components thereof, is highly productive, and is less likely to malfunction.

### [Technical Solution]

The first technical aspect of the present invention may provide a battery pack including a plurality of battery cells stacked in a first direction, and a pack case configured to accommodate the plurality of battery cells in an inner space therein, wherein each of at least a pair of adj acent battery cells among the plurality of battery cells includes an electrode assembly, a cover surrounding the electrode assembly, and a cell lead protruding from a side of the cover in a second direction, wherein the cell lead includes a first part disposed closer to the cover than a second part, wherein a maximum dimension of the second part is greater than a maximum dimension of the first part in the first direction, wherein second part includes a plane perpendicular to a third direction, and wherein the first direction, the second direction, and the third direction are perpendicular to one another.

In some embodiments, the second parts of the pair of adjacent battery cells may correspond to each other and may be electrically connected to each other by a bus bar.

In some embodiments, the bus bar may be electrically connected to the second parts by welding in the third direction.

In some embodiments, a dimension of the second part may be about 0.5% to about 50% of a dimension of the first part in the third direction.

In some embodiments, a center of the first part may be located between an upper surface of the second part and a lower surface of the second part in the third direction.

In some embodiments, an upper surface of the second part may be located on substantially a same plane as an upper surface of the first part.

In some other embodiments, a lower surface of the second part may be located on substantially a same plane as a lower surface of the first part.

In some embodiments, the maximum dimension of the second part may be about 2 to about 20 times a size of the maximum dimension of the first part in the first direction.

In some embodiments, on the plane perpendicular to the third direction, an area of a projection of the second part may be about 2 to about 20 times a size of an area of a projection of the first part.

The second technical aspect of the present invention may provide a method of manufacturing a battery pack, the method including disposing a plurality of battery cells directly in a pack case, and electrically connecting cell leads protruding in a second direction from at least two adjacent battery cells among the plurality of battery cells using a bus bar, wherein, the electrically connecting of the cell leads using the bus bar may include connecting each of the cell leads to the bus bar by welding in a third direction, and wherein a first direction, the second direction, and the third direction are perpendicular to one another.

In some embodiments, the cell lead may include a first part disposed closer to a cover than a second part, a maximum dimension of the second part may be greater than a maximum dimension of the first part in the first direction, and wherein the second part may include a plane perpendicular to the third direction.

In some embodiments, a dimension of the second part is about 0.5% to about 50% of a dimension of the first part in the third direction.

In some embodiments, the second part may not be provided with a through-hole.

In some embodiments, the second part may be provided with a through-hole.

The third technical aspect of the present invention may provide a battery cell including two main surfaces perpendicular to a first direction, the battery cell including an electrode assembly, a cover surrounding the electrode assembly, and a cell lead protruding from a side of the cover in a second direction, wherein the cell lead includes a first part disposed closer to the cover than a second part, wherein a maximum dimension of the second part is greater than a maximum dimension of the first part in the first direction, wherein the second part includes a plane perpendicular to a third direction, wherein, on the plane perpendicular to the third direction, an area of a projection of the second part is about 2 to about 20 times a size of an area of a projection of the first part, and wherein the first direction, the second direction, and third direction are perpendicular to one another.

### [Advantageous Effects]

Battery packs according to embodiments of the present invention can be manufactured at low costs due to a small number of components thereof, are highly productive, and are not likely to malfunction.

### [Brief Description of the Drawings]

FIG. 1 is an exploded perspective view of a main part of a battery pack according to an embodiment of the present invention.
FIG. 2 is a perspective view of a main part of a battery cell according to an embodiment of the present invention.
FIG. 3 is a partially enlarged view of a part of a battery cell, including a cell lead part of the battery cell, according to an embodiment of the present invention.
FIG. 4 is a partially enlarged view of the part of the battery cell, including the cell lead part of the battery cell, when viewed in an x-axis direction.
FIG. 5 is a partially enlarged view of the part of the battery cell, including the cell lead part of the battery cell, when viewed in a y-axis direction.
FIG. 6 is a partially enlarged view of the part of the battery cell, including the cell lead part of the battery cell, when viewed in a z-axis direction.
FIG. 7A is a partially enlarged view of a part of a battery cell, including a cell lead part of the battery cell, according to another embodiment of the present invention.
FIG. 7B is a partially enlarged view of a part of a battery cell, including a cell lead part of the battery cell, according to another embodiment of the present invention.
FIG. 8 is a perspective view of a pair of adjacent battery cells electrically connected to each other by a bus bar.
FIG. 9 is a cross-sectional view of second parts and the bus bar of FIG. 8 taken along line IX-IX'.
FIG. 10 is a flowchart of a manufacturing method of a battery pack according to an embodiment of the present invention.
FIGS. 11A and 11B are perspective views illustrating a manufacturing method of a battery pack according to an embodiment of the present invention.

### [Best Mode]

Hereinafter, embodiments of the concept of the present invention will be described in detail with reference to the accompanying drawings. However, embodiments of the concept of the present invention may be embodied in many different forms and thus the scope of the present invention should not be interpreted as being limited by the embodiments described below. It should be understood that the embodiments of the concept of the present invention are provided to more completely describe the concept of the present invention to those of ordinary knowledge in the art. The same reference numerals denote the same elements throughout the specification. Furthermore, in the drawings, various elements and areas are shown schematically. Therefore, the concept of the present invention is not limited by the relative sizes of elements or the intervals therebetween shown in the accompanying drawings.

Terms such as first and second may be used to describe various components but the components are not limited by the terms. These terms are used only for the purpose of distinguishing one component from another. For example, a first component may be referred to as a second component without departing from the scope of the present invention, and similarly, the second component may be referred to as the first component.

The terms used in this application are only used to describe certain embodiments and are not intended to limit the concept of the present invention. As used herein, the singular expressions are intended to include plural forms as well, unless the context clearly dictates otherwise. It should be understood that the terms "comprise" and/or "comprising", when used herein, specify the presence of stated features, integers, steps, operations, elements, components, or a combination thereof, but do not preclude the presence or addition of one or more features, integers, steps, operations, elements, components, or a combination thereof.

Unless otherwise defined, all terms (including technical and scientific terms) used herein have the same meaning as commonly understood by one of ordinary skill in the technical field to which the concept of the present invention pertains. **In** addition, terms commonly used and defined in dictionaries should be interpreted as having a meaning consistent with the context of the related art and should not be interpreted in an overly formal sense unless explicitly defined herein.

When an embodiment may be implemented differently, certain operations may be performed in an order different from that described below. For example, two operations described consecutively may be performed substantially concurrently or in an order reverse to that described below.

It will be expected that the shapes of components illustrated in the accompanying drawings may vary, for example, according to manufacturing technology and/or tolerances. Therefore, embodiments of the present invention should not be construed as being limited by a specific shape of each region illustrated in the present specification but should be understood to cover, for example, a change in the shape of each region, caused during a manufacture process. As used herein, the term "and/or" includes any and all combinations of one or more of the associated listed items. The term "substrate" used herein should be understood to mean a substrate or a stacked structure including the substrate and layers, films, etc. that are formed on a surface of the substrate. In addition, the expression "surface of the substrate" used herein should be understood to mean an exposed surface of the substrate or an outer surface of a layer or film formed on the substrate.

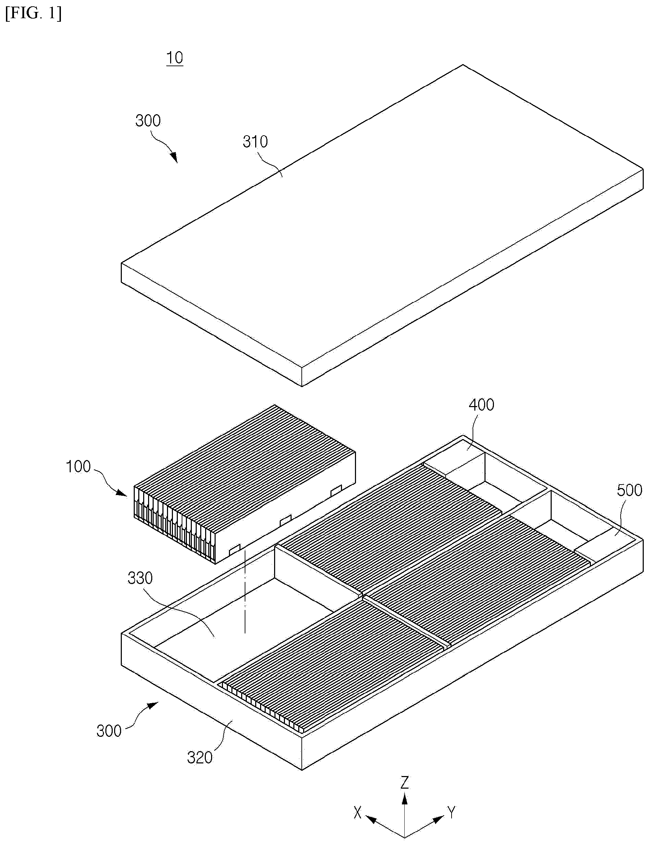

FIG. 1 is an exploded perspective view of a main part of a battery pack 10 according to an embodiment of the present invention. FIG. 1 illustrates that the battery pack 10 is defined in a vertical coordinate system defined by a first direction along an x-axis, a second direction along a y-axis, and a third direction along a z-axis that are perpendicular to one another, but the first, second and third directions are not particularly limited, provided that they are relatively perpendicular to one another.

Referring to FIG. 1, the battery pack 10 includes a plurality of battery cells 100 stacked in the first direction (e.g., an x-axis direction) and a pack case 300 accommodating the plurality of battery cells 100 therein.

The pack case 300 includes an inner space 330 for accommodating the plurality of battery cells 100. In some embodiments, the pack case 300 may include an upper case 310 and a lower case 320 that define the inner space 330.

Although not explicitly shown in FIG. 1, conducting wires may be embedded in the pack case 300 to electrically connect the plurality of battery cells 100 to an external electrical load.

In some embodiments, the lower case 320 may have a box shape whose upper end is open, and multiple battery cells may be accommodated in the inner space 330. The upper case 310 may be in the form of a cover to cover the open upper end of the lower case 320. In this case, the upper case 310 may be in the form of a box whose lower end is open.

The pack case 300 may include a plastic or metal material. In addition, one of various exterior materials of battery packs publicly known at the time of filing the present invention may be employed as a material of the pack case 300.

The battery pack 10 may further include a battery management system (BMS) 400 as shown in FIG. 1. The BMS 400 may be mounted in the inner space 330 of the pack case 300, and configured to control overall operations of the battery cells 100 such as a charging/discharging operation, a data transmission/reception operation, etc. The BMS 400 may be provided in units of packs rather than in units of modules. More specifically, the BMS 400 may be configured to control a charged/discharged state, a power state, a performance state, etc. of the battery cell 100, based on a pack voltage and a pack current.

As shown in FIG. 1, the battery pack 10 may further include a battery disconnection unit (BDU) 500. The BDU 500 may be configured to control electrical connection between battery cells to manage a power capacity and functions of the battery pack 10. To this end, the BDU 500 may include a power relay, a current sensor, a fuse, etc. Similarly, the BDU 500 is a component provided in units of packs rather than in units of modules, and various types of disconnection units publicly known at the time of filing the present invention may be employed as the BDU 500.

The battery pack 10 may further include components of various types of battery packs publicly known at the time of filing the present invention. For example, according to an embodiment of the present invention, the battery pack 10 may further include a manual service disconnector (MSD) to cut off power by manually separating a service plug by a worker.

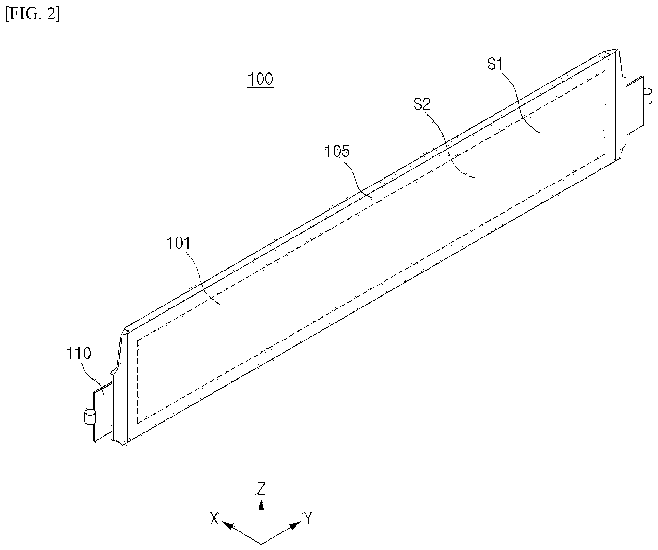

FIG. 2 is a perspective view of a main part of a battery cell 100 according to an embodiment of the present invention.

Referring to FIG. 2, the battery cell 100 includes an electrode assembly 101, a cover 105 surrounding the electrode assembly 101, and a cell lead 110 protruding from one side of the cover 105 in the second direction (e.g., a y-axis direction).

In some embodiments, the battery cell 100 may be a pouch type battery cell but the present invention is not limited thereto. In some embodiments, the battery cell 100 may be a prismatic battery cell.

In some embodiments, the battery cell 100 includes a thin plate-shaped body and may have a structure of a pouch cell. The pouch cell may have a structure in which a positive electrode, a separator, and a negative electrode are alternately stacked to form the electrode assembly 101, and an electrode tab is drawn from at least one side of the electrode assembly 101 and connected to the cell lead 110. The positive electrode and the negative electrode may be prepared by coating at least one surface of a current collector with a slurry such as an electrode active material, a binder resin, a conductive agent, or other additives. As the electrode active material, a general positive electrode active material such as a lithium-containing transition metal oxide may be used in the case of the positive electrode, and a general negative electrode active material, such as a lithium metal, a carbon material, a metal compound, or a mixture thereof that occludes and releases lithium ions, may be used in the case of the negative electrode. A general porous polymer film for use in a lithium secondary battery may be employed as the separator.

A general electrolyte for a lithium secondary battery may be employed as an electrolyte accommodated in the cover 105 together with the electrode assembly 101. The cover 105 is formed of a sheet material and includes a receiving part for accommodating the electrode assembly 101. The cover 105 is formed by combining a first case and a second case that are formed by processing the sheet material into certain shapes. The sheet material of the cover 105 has a multilayer structure, in which an outermost resin layer formed of an insulating material such as polyethylene terephthalate (PET) or nylon, a metal layer formed of aluminum to maintain mechanical strength and prevent the permeation of moisture and oxygen, and an inner resin layer that is formed of a polyolefin-based material with thermal adhesion and thus serves as a sealing material are stacked.

In the sheet material of the cover 105, an adhesive resin layer may be interposed between the inner resin layer and the metal layer and between the outermost resin layer and the metal layer as necessary. The adhesive resin layer is formed in a single layer or multiple layers for smooth adhesion between different types of materials, and as a material of the adhesive resin layer, a polyolefin-based resin may be generally used, a polyurethane resin may be used for smooth processing, or a mixture thereof may be used.

As shown in FIG. 2, the battery cell 100 includes two main surfaces S1 and S2 perpendicular to the first direction (e.g., the x-axis direction). That is, the battery cell 100 may include a first main surface S1 and a second main surface S2 that extend along an yz plane of FIG. 2 and that are parallel to each other.

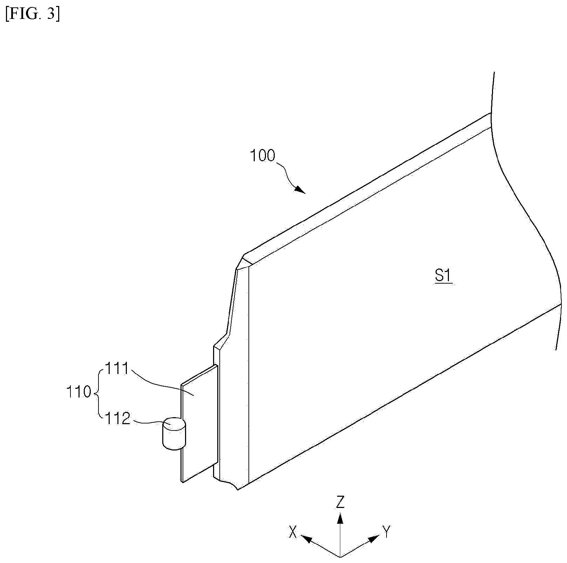

FIG. 3 is a partially enlarged view of a part of a battery cell 100, including a cell lead part 110 of the battery cell 100, according to an embodiment of the present invention.

Referring to FIG. 3, the cell lead 110 protrudes from one side of the cover 105 in the second direction (e.g., the y-axis direction), and includes a first part 111 and a second part 112. The first part 111 may be located closer to the cover 105 than the second part 112. The second part 112 may be a foremost end of the cell lead 110 in the second direction.

The first part 111 and the second part 112 may be electrically connected to each other. In some embodiments, the first part 111 and the second part 112 may be in direct contact with each other but the present invention is not limited thereto. In some embodiments, the first part 111 and the second part 112 may be integrally formed.

In some embodiments, the first part 111 may have a flat plate shape having a plane substantially perpendicular to the first direction (e.g., the x-axis direction) as a main plane. In some embodiments, the second part 112 may be configured as a plane perpendicular to the third direction (e.g., the z-axis direction). Here, the configuring of the second part 112 as the plane perpendicular to the third direction should be understood to mean that an upper surface and lower surface of the second part 112 are perpendicular to the third direction and are not provided with through-holes. In some embodiments, the upper and lower surfaces of the second part 112 may be perpendicular to the third direction and may not be provided with through-holes. In some embodiments, the upper and lower surfaces of the second part 112 may be perpendicular to the third direction and may be provided with through-holes.

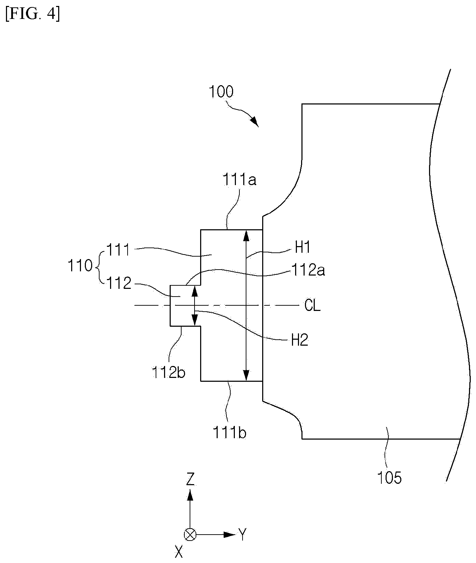

FIG. 4 is a partially enlarged view of the part of the battery cell 100, including the cell lead part 100 of the battery cell, when viewed in the x-axis direction.

Referring to FIG. 4, the first part 111 of the cell lead 110 includes a first upper surface 111a and a first lower surface 111b. The second part 112 of the cell lead 110 includes a second upper surface 112a and a second lower surface 112b. Here, the "upper surface" and the "lower surface" are relative concepts, and thus, a surface at a relatively high position and a surface at a relatively low position may be respectively defined as the "upper surface" and the "low surface" or one of surfaces may be defined as the "upper surface" and the other surface may be defined as the "low surface".

A center line CL may be defined with respect to the first part 111. The center line CL is a straight line in the second direction (e.g., the y-axis direction) that divides the first part 111 into halves in the third direction (e.g., the z-axis direction).

In the third direction, the center line CL may be positioned between the second upper surface 112a and the second lower surface 112b of the second part 112.

In the third direction, the first part 111 has a first dimension H1, and the second part 112 has a second dimension H2 less than the first dimension H1. The second dimension H2 may be, for example, about 0.5% to about 50% of the first dimension H1. In some embodiments, the second dimension H2 may be about 0.5% to about 50%, about 1% to about 48%, about 1.5% to about 45%, about 2% to about 43%, about 2.5% to about 40%, about 3% to about 38%, about 3.5% to about 35%, about 4% to about 33%, about 4.5% to about 30%, about 5% to about 28%, about 5.5% to about 25%, about 6% to about 23%, about 6.5% to about 20%, about 7% to about 18%, 7.5% to about 15%, about 8% to about 13%, or about 8.5% to about 10% of the first dimension H1, or may be in a range between two numerical values among these numerical values.

When the second dimension H2 is extremely small compared to the first dimension H1, the mechanical strength of the second part 112 may be insufficient and thus be easily damaged. When the second dimension H2 is extremely large compared to the first dimension H1, the weight of the battery cell 100 may increase unnecessarily.

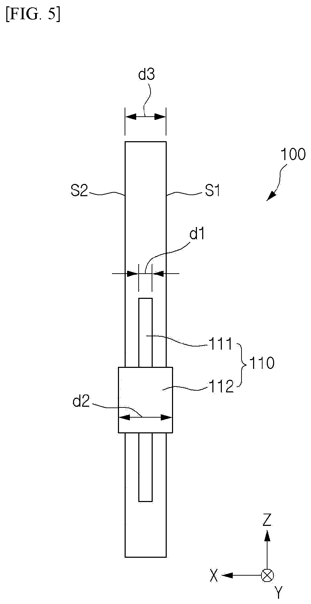

FIG. 5 is a partially enlarged view of the part of the battery cell 100, including the cell lead part 110 of the battery cell 100, when viewed in the y-axis direction.

Referring to FIG. 5, in the first direction (e.g., the x-axis direction), the first part 111 of the cell lead 110 has a first maximum dimension d1, and the second part 112 of the cell lead 110 has a second maximum dimension d2. The second maximum dimension d2 is greater than the first maximum dimension d1. For example, the second maximum dimension d2 may be about twice to about 20 times the first maximum dimension d1. In some embodiments, the second maximum dimension d2 may be about twice to about 20 times, about 2.5 times to about 19.5 times, about 3 times to about 19 times, about 3.5 times to about 18.5 times, about 4 times to about 18 times, about 4.5 times to about 17.5 times, about 5 times to about 17 times, about 5.5 times to about 16.5 times, about 6 times to about 16 times, about 6.5 times to about 15.5 times, about 7 times to about 15 times, about 7.5 times to about 14.5 times, about 8 times to about 14 times, about 8.5 times to about 13.5 times, about 9 times to about 13 times, about 9.5 times to about 12.5 times, about 10 times to about 12 times, or about 10.5 times to about 11.5 times the first maximum dimension d1, or may be in a range between two numerical values among these numerical values.

When the second maximum dimension d2 is extremely small compared to the first maximum dimension d1, it may not be easy to weld a bus bar, which will be described below, and the second part 112 together. When the second maximum dimension d2 is extremely large compared to the first maximum dimension d1, a thickness of the battery cell 100 in the first direction (e.g., the x-axis direction) may increase excessively, thus resulting in a reduction of energy density.

In some embodiments, the second maximum dimension d2 of the second part 112 in the first direction (e.g., the x-axis direction) may be greater than a cell thickness d3 defined between the first main surface S1 and the second main surface S2 of the battery cell 100. In some other embodiments, the second maximum dimension d2 of the second part 112 in the first direction (e.g., the x-axis direction) may be smaller than the cell thickness d3 defined between the first and second main surfaces S1 and S2 of the battery cell 100.

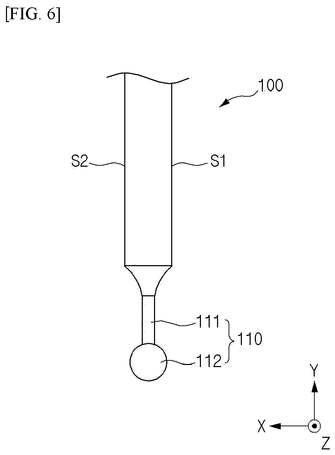

FIG. 6 is a partially enlarged view of the part of the battery cell 100, including the cell lead part 100 of the battery cell, when viewed in the z-axis direction.

Referring to FIG. 6, a projection of the second part 112 on a plane (e.g., an xy plane) perpendicular to the third direction (e.g., the z-axis direction) may have a circular shape. In some embodiments, the projection of the second part 112 on the xy plane may have an elliptic shape, a polygonal shape (e.g., a quadrangular shape, a pentagonal shape or a hexagonal shape) or any other shapes, as well as the circular shape. However, the projection may have the circular shape in terms of diversity of welding methods to be used to weld the second part 112 together with a bus bar afterwards, structural stability, easiness in handling, etc.

In some embodiments, when the projection has the circular shape, the second part 112 may have a cylindrical or conical shape. When the projection has the polygonal shape, the second part 112 may have a polyprism or polypyramid shape.

An area of the projection of the second part 112 may be about twice to about 20 times that of a projection of the first part 111. In some embodiments, the area of the projection of the second part 112 may be about twice to about 20 times, about 2.5 times to about 19 times, about 3 times to about 18 times, about 3.5 times to about 17 times, about 4 times to about 16 times, about 4.5 times to about 15 times, about 5 times to about 14 times, about 5.5 times to about 13 times, about 6 times to about 12 times, about 6.5 times to about 11 times, about 7 times to about 10 times, or about 7.5 times to about 9 times the area of the projection of the first part 111, or may be in a range between two numerical values among these numerical values.

When the area of the projection of the second part 112 is extremely small compared to the area of the projection of the first part 111, it may not be easy to weld the second part 112 and a bus bar to be described below. When the area of the projection of the second part 112 is extremely large compared to the area of the projection of the first part 111, the weight of the battery cell 100 may increase unnecessarily.

The second parts 112 of the cell leads 110 of the battery cells 100 each have a planar shape perpendicular to the third direction (e.g., the z-axis direction) and thus the battery cells 100 may be electrically connected to each other after being coupled to the pack case 300. Accordingly, battery packs according to embodiments of the present invention can be manufactured at low costs due to a small number of components thereof, are highly productive, and are not likely to malfunction.

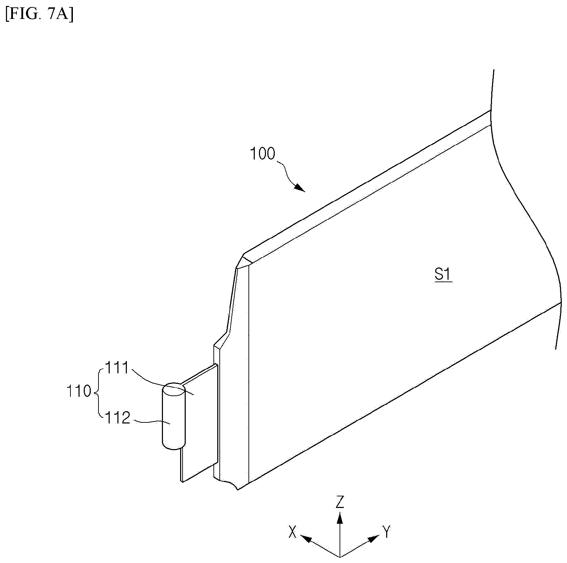

FIG. 7A is a partially enlarged view of a part of a battery cell 100, including a cell lead part 110 of the battery cell 100, according to another embodiment of the present invention.

Referring to FIG. 7A, a second part 112 may be configured such that a second upper surface 112a thereof is located on substantially the same plane as a first upper surface 111a of a first part 111.

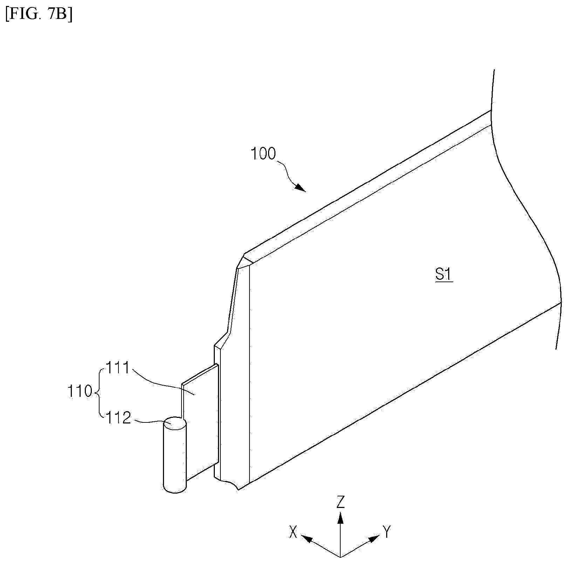

FIG. 7B is a partially enlarged view of a part of a battery cell 100, including a cell lead part 110 of the battery cell 100, according to another embodiment of the present invention.

Referring to FIG. 7B, a second part 112 may be configured such that a second low surface 112b thereof is located on substantially the same plane as a first lower surface 111b of a first part 111.

By configuring the second part 112 as illustrated in FIG. 7A or 7B, an error margin may be secured for the positioning of a bus bar when the second part 112 and the bus bar are welded together at a later time.

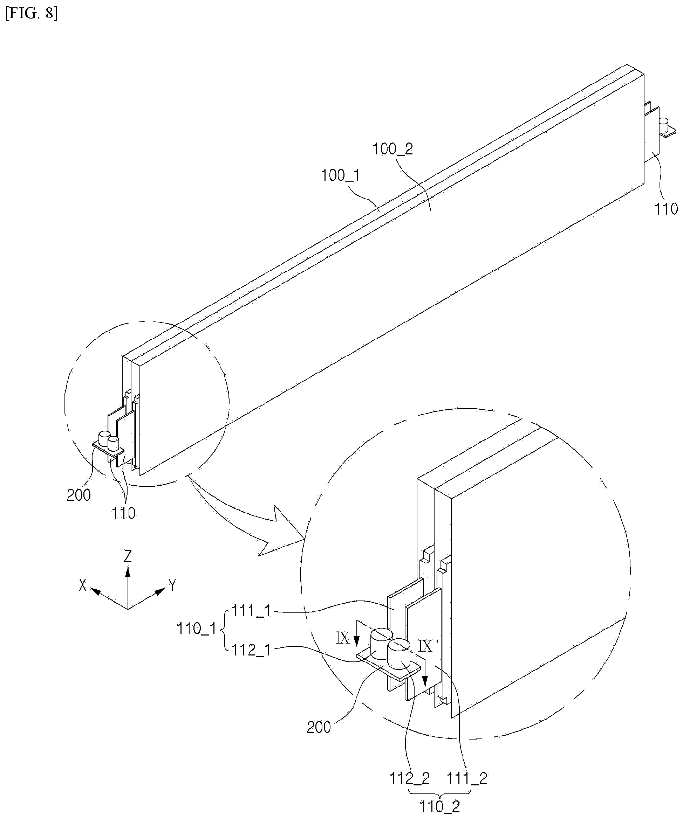

FIG. 8 is a perspective view of a pair of adjacent battery cells 100_1 and 100_2 electrically connected to each other by a bus bar 200.

Referring to FIG. 8, a cell lead 110_1 of the first battery cell 100_1 includes a first part 111_1 and a second part 112_1, and a cell lead 110_2 of the second battery cell 100_2 includes a first part 111_2 and a second part 112_2.

The cell lead 110_1 of the first battery cell 100_1 and the cell lead 110_2 of the second battery cell 100_2 may be electrically connected to each other by the bus bar 200. Specifically, the second part 112_1 of the first battery cell 100_1 and the second part 112_2 of the second battery cell 100_2 may be electrically connected to each other by the bus bar 200.

The cell lead 110_1 of the first battery cell 100_1 and the cell lead 110_2 of the second battery cell 100_2 electrically connected to each other by the bus bar 200 may have the same polarity or different polarities.

The bus bar 200 may be disposed to extend in the first direction (e.g., the x-axis direction), and configured to be in contact with a lower surface of the second part 112_1 of the first battery cell 100_1 and a lower surface of the second part 112_2 of the second battery cell 100_2. In some embodiments, the bus bar 200 may be in the form of a strip extending in the first direction. In this case, a flat surface of the bus bar 200 may face the second part 112_1 of the first battery cell 100_1 and the second part 112_2 of the second battery cell 100_2 in the third direction (e.g., the z-axis direction).

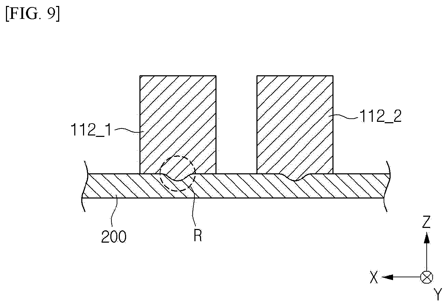

FIG. 9 is a cross-sectional view of the second parts 112_1 and 112_2 and the bus bar 200 of FIG. 8, taken along line IX-IX'.

Referring to FIG. 9, portions of the bus bar 200 overlapping the second parts 112_1 and 112_2 may have recesses R that are concave in the third direction (e.g., the z-axis direction). In some embodiments, the recesses R may be generated as a result of welding the bus bar 200 and the second parts 112_1 and 112_2 in the third direction. However, the recesses R are results generated as interfaces between the bus bar 200 and the second parts 112_1 and 112_2 are partially melted and coagulated by welding and thus may appear as traces of melting and coagulation in some cases.

FIG. 9 illustrates that the recesses R are consecutively formed in the flat surface of the bus bar 200 but in some cases, slightly uplifted parts may be formed around the recesses R.

In some embodiments, the recesses R may not be identified as clear interfaces according to a welding method.

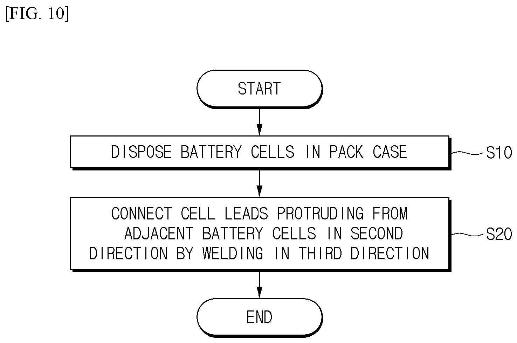

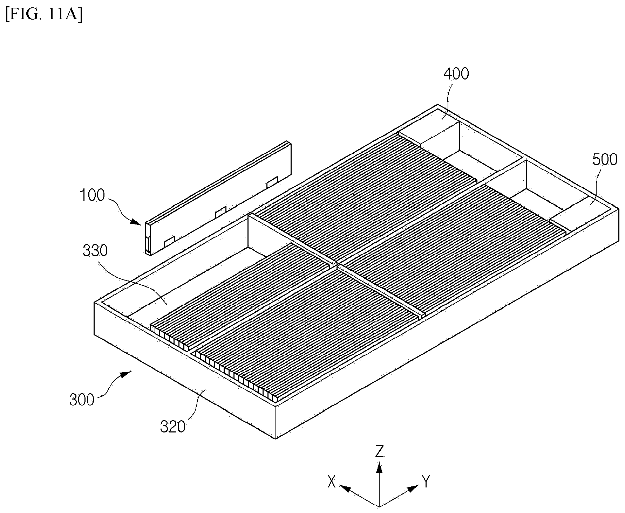

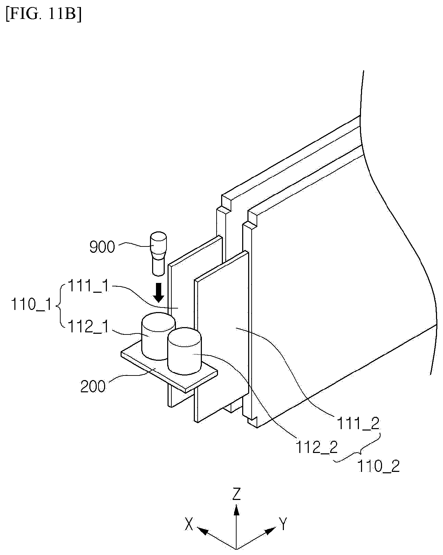

FIG. 10 is a flowchart of a manufacturing method of a battery pack 10 according to an embodiment of the present invention. FIGS. 11A and 11B are perspective views illustrating a manufacturing method of the battery pack 10 according to an embodiment of the present invention.

Referring to FIGS. 10 and 11A, a plurality of battery cells 100 may be directly disposed in a pack case 300 (S10). Here, the disposing of the plurality of battery cells 100 directly in the pack case 300 should be understood as disposing the plurality of battery cells 100 in the pack case 300 without modularizing the plurality of battery cells 100.

In some embodiments, the plurality of battery cells 100 may be disposed in the pack case 300 individually one by one. In some other embodiments, two or more of the plurality of battery cells 100 may be stacked and then disposed in the pack case 300.

A method of disposing the battery cells 100 in the pack case 300 is not particularly limited, and the battery cells 100 may be disposed in the pack case 300 by any of known methods. A configuration of each of the battery cells 100 has been described above in detail with reference to FIGS. 1 to 7B and thus a detailed description thereof is omitted here.

Referring to FIGS. 10 and 11B, cell leads 110_1 and 110_2 protruding from two adjacent battery cells 100 in the second direction (e.g., the y-axis direction) may be electrically connected to a bus bar 200 (S20). The cell leads 110_1 and 110_2 may be connected to the bus bar 200 by welding in the third direction (e.g., the z-axis direction).

In some embodiments, the bus bar 200 may be disposed in the pack case 300 before the plurality of battery cells 100 are disposed in the pack case 300. In some embodiments, the bus bar 200 may be disposed on the cell leads 110_1 and 110_2 after the plurality of battery cells 100 are disposed in the pack case 300. Thereafter, the bus bar 200 may be welded together with the cell leads 110_1 and 110_2. A welding method may be any of known methods and is not particularly limited.

Second parts 112_1 and 112_2 of the cell leads 110_1 and 110_2 of the battery cells 100 each have a planar shape perpendicular to the third direction (e.g., the z-axis direction) and thus the battery cells 100 may be electrically connected to each other after being coupled to the pack case 300. Accordingly, battery packs according to embodiments of the present invention can be manufactured at low costs due to a small number of components thereof, are highly productive, and are not likely to malfunction.

Although the embodiments of the present invention have been described above in detail, the present invention may be implemented in many different forms by those of ordinary skill in the art, to which the present invention pertains, without departing from the spirit and scope of the present invention defined in the appended claims. Therefore, it should be understood that all modifications in embodiments of the present invention fall within the scope of the present invention.

## Claims

1. A battery pack comprising:
a plurality of battery cells stacked in a first direction; and
a pack case configured to accommodate the plurality of battery cells in an inner space therein,
wherein each of at least a pair of adjacent battery cells among the plurality of battery cells comprises an electrode assembly, a cover surrounding the electrode assembly, and a cell lead protruding from a side of the cover in a second direction,
wherein the cell lead comprises a first part disposed closer to the cover than a second part,
wherein a maximum dimension of the second part is greater than a maximum dimension of the first part in the first direction,
wherein the second part includes a plane perpendicular to a third direction, and
wherein the first direction, the second direction, and the third direction are perpendicular to one another.

2. The battery pack of claim 1, wherein the second parts of the pair of adjacent battery cells correspond to each other and are electrically connected to each other by a bus bar.

3. The battery pack of claim 2, wherein the bus bar is electrically connected to the second parts by welding in the third direction.

4. The battery pack of claim 2, wherein a dimension of the second part is about 0.5% to about 50% of a dimension of the first part in the third direction.

5. The battery pack of claim 4, wherein a center of the first part is located between an upper surface of the second part and a lower surface of the second part in the third direction.

6. The battery pack of claim 2, wherein an upper surface of the second part is located on substantially a same plane as an upper surface of the first part.

7. The battery pack of claim 2, wherein a lower surface of the second part is located on substantially a same plane as a lower surface of the first part.

8. The battery pack of claim 2, wherein the maximum dimension of the second part is about 2 to about 20 times a size of the maximum dimension of the first part in the first direction.

9. The battery pack of claim 1, wherein, on the plane perpendicular to the third direction, an area of a projection of the second part is about 2 to about 20 times a size of an area of a projection of the first part.

10. A method of manufacturing a battery pack, the method comprising:
disposing a plurality of battery cells directly in a pack case; and
electrically connecting cell leads protruding in a second direction from at least two adjacent battery cells among the plurality of battery cells using a bus bar,
wherein the electrically connecting of the cell leads using the bus bar comprises connecting each of the cell leads to the bus bar by welding in a third direction, and
wherein a first direction, the second direction, and the third direction are perpendicular to one another.

11. The method of claim 10, wherein the cell lead comprises a first part disposed closer to a cover than a second part,
a maximum dimension of the second part is greater than a maximum dimension of the first part in the first direction, and
wherein the second part includes a plane perpendicular to the third direction.

12. The method of claim 11, wherein a dimension of the second part is about 0.5% to about 50% of a dimension of the first part in the third direction.

13. The method of claim 11, wherein the second part is not provided with a through-hole.

14. The method of claim 10, wherein the second part is provided with a through-hole.

15. A battery cell including two main surfaces perpendicular to a first direction, the battery cell comprising an electrode assembly, a cover surrounding the electrode assembly, and a cell lead protruding from a side of the cover in a second direction,
wherein the cell lead comprises a first part disposed closer to the cover than a second part,
wherein a maximum dimension of the second part is greater than a maximum dimension of the first part in the first direction,
wherein the second part includes a plane perpendicular to a third direction,
wherein, on the plane perpendicular to the third direction, an area of a projection of the second part is about 2 to about 20 times a size of an area of a projection of the first part, and
wherein the first direction, the second direction, and third direction are perpendicular to one another.
